# FASCICULE DE BREVET EUROPEEN

(11) **EP 4 416 636 B1**
(45) Date de publication et mention de la délivrance du brevet: **25.03.2026**
(21) Numéro de dépôt: 22802202.6
(22) Date de dépôt: 14.10.2022
(51) Int. Cl.: G06K 19/07, G06K 19/077

(54) **CARTE À PUCE AVEC CAPTEUR BIOMÉTRIQUE**
CHIPKARTE MIT BIOMETRISCHEM SENSOR
CHIP CARD WITH BIOMETRIC SENSOR

(30) Priorité: 14.10.2021 FR 2110915
(43) Date de publication de la demande: 21.08.2024
(73) Titulaire: Smart Packaging Solutions, 13790 Rousset (FR)
(72) Inventeur: AUBERT, Damien, 13790 ROUSET (FR); MATHIEU, Turelier, 13790 ROUSSET (FR)
(74) Mandataire: Tranvouez, Edern Morgan
(86) Numéro de dépôt international: PCT/FR2022/000093
(87) Numéro de publication internationale: WO 2023/062293

(56) Documents cités:
- WO-A1-2018/035258
- WO-A1-2018/158644
- FR-A1- 2 776 796

## Description

L'invention concerne les objets portables sécurisés et communicants tels que notamment les cartes bancaires ou les documents d'identification à puce, pourvus d'un premier module microélectronique à fonctionnement à contact, sans contact, ou à fonctionnement mixte à contact et sans contact, et d'un second module ou composant électronique tel qu'un capteur biométrique destiné à communiquer avec le premier module, notamment pour lui transmettre des informations biométriques de l'utilisateur de la carte à puce.

A titre d'exemple et de simplification de l'exposé, l'invention sera décrite principalement dans le cadre de son application aux cartes à puce pourvues d'un capteur d'empreintes digitales, sans pour autant limiter la portée de l'invention à d'autres objets portables ou d'autres facteurs de forme, et à d'autres types de composants électroniques tels que par exemple des écrans, ou des capteurs biométriques de toute nature, voire des composants électroniques discrets non montés dans un module support.

Les cartes à puce à fonctionnement sans contact réalisées au format ISO 7816 et utilisées pour des applications bancaires constituent l'exemple le plus répandu des cartes d'identification auxquelles s'applique l'invention. Mais l'invention s'applique également à d'autres types de documents sécurisés, notamment les passeports et autres documents de sécurité utilisés pour des applications d'identification numérique.

### État de la technique

La plupart des cartes à puce sans contact ou des cartes duales à fonctionnement mixte à contact et sans contact connues comportent un corps de carte, un module électronique inséré dans une cavité du corps de carte et pourvu d'une puce microélectronique, et une antenne disposée dans le corps de carte. Celle-ci est soit galvaniquement connectée à des plots de sortie de la puce microélectronique, soit couplée inductivement à une antenne plus petite directement intégrée au module électronique de la carte à puce. Dans les deux configurations, l'antenne du corps de carte permet une communication par voie radiofréquence avec l'antenne d'un lecteur de carte à puce.

L'antenne du corps de carte est généralement constituée de spires réalisées à l'aide de pistes électriquement conductrices, disposées sur un insert ou substrat flexible qui est intégré au corps de carte et laminé avec les couches de celui-ci pendant l'assemblage de la carte.

Alternativement, il existe des cartes à puce à fonctionnement purement à contact, et dont le corps de carte ne comporte pas d'antenne.

Dans un certain nombre d'applications, il devient nécessaire d'intégrer à la carte à puce un ou plusieurs modules ou composants électroniques complémentaires par rapport au module ou composant principal, par exemple pour l'intégration de capteurs biométriques susceptibles de collecter des informations biométriques et de les transmettre au module ou composant principal à des fins d'identification biométrique de l'utilisateur de la carte à puce.

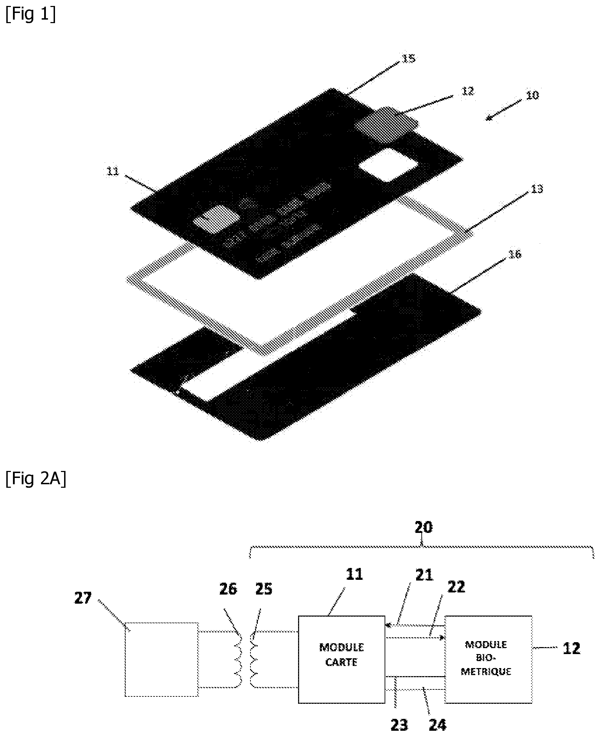

Dans ce cas, comme par exemple dans le cas de la carte représentée en figure 1, le ou les capteurs biométriques et le module principal à contact ou sans contact sont disposés sur un support relativement rigide en forme de plaque encore appelé circuit imprimé ou PCB (acronyme de l'expression anglo-saxonne « Printed Circuit Board ») sur lequel les composants sont interconnectés. Cet arrangement présente plusieurs inconvénients.

En effet, l'interconnexion de plusieurs modules électroniques disposés sur un support de type PCB est coûteuse car elle nécessite généralement des composants électroniques supplémentaires non intégrés aux modules électroniques de la carte à puce, et une modification des processus de fabrication classiques des cartes à puce, ce qui entraine des surcoûts non négligeables. Elle est en outre peu fiable dans le temps car les flexions répétées que le produit devra subir au cours de son utilisation risquent de rompre plus ou moins rapidement les interconnexions électriques réalisées sur le PCB entre les modules.

Or le marché demande une fiabilité accrue et un coût moindre pour des cartes à puce ou équivalent pourvues d'une part d'un module électronique principal à contact ou sans contact et d'autre part d'un capteur biométrique ou d'un autre module secondaire . Cela suppose de trouver un moyen d'éliminer le substrat PCB et de trouver un moyen alternatif plus fiable et moins coûteux pour interconnecter le module électronique principal de la carte à puce, servant notamment à l'identification du porteur de carte, et le capteur biométrique ou autre, comme par exemple un capteur d'empreintes digitales, pour faire en sorte que tous les composants électroniques actifs et passifs de la carte à puce soient intégralement répartis entre le module électronique principal et le module électronique secondaire sans nécessiter de support de type PCB.

On connait de par le document WO 2018/158644 A1 une carte à puce comportant un premier module électronique de paiement bancaire et un second module électronique pourvu d'un capteur biométrique, les deux modules étant connectés à une antenne susceptible de communiquer avec un lecteur externe. L'antenne sert à la fois à l'interconnexion entre les deux modules et à la communication radiofréquence. La connexion entre les modules et l'antenne est réalisée par de simples gouttes de soudure ou un film conducteur anisotropique. Des plots de connexion rapportés sont disposés sur l'insert et connectés à l'antenne, par un processus additif venant localement créer une surépaisseur permettant une connexion entre le module et l'antenne après usinage de la cavité accueillant le module.

On connait par ailleurs de par le document FR 2 776 796 A1 une carte à puce pourvue d'un module de paiement et d'un afficheur contrôlé par un microcontrôleur. Les différents composants sont connectés par de simples fils électriques flottants.

### But de l'invention

Le but général de l'invention est par conséquent de proposer une nouvelle structure d'objet portable communicant, notamment de carte à puce ou équivalent, qui soit dénuée des inconvénients ci-dessus, et en particulier une structure permettant de faire communiquer entre eux les différents modules ou puces électroniques principaux avec des modules secondaires tels que des capteurs biométriques intégrés dans la carte à puce ou des documents de sécurité équivalents, sans nécessiter de support de type PCB pourvu de composants électroniques discrets.

Un autre but de l'invention est de proposer une carte à puce ou équivalent comportant plusieurs modules électroniques capables de communiquer entre eux, mais restant compatible avec un procédé de fabrication de carte à puce déjà existant et bien maitrisé, à savoir le report de modules électroniques épais dans des cavités aménagées dans le corps de carte, ainsi que l'utilisation du parc de machines de fabrication classiques correspondant.

Un autre but de l'invention est de proposer une carte à puce comportant plusieurs modules électroniques pourvus de plots de connexions potentiellement situés dans des plans différents dans l'épaisseur de la carte, et de pistes d'interconnexion ou de raccordement capables de compenser ces différences de positionnement.

Un autre but de l'invention est de proposer une structure de carte à puce pourvue d'un insert permettant de s'adapter aisément à diverses architectures, comme par exemple une carte à puce pourvue de deux modules épais, ou d'un module épais et d'une puce microélectronique montée en « flip-chip ».

### Résumé de l'invention

Dans son principe, l'invention consiste à proposer un insert (encore appelé « inlay » en terminologie anglo-saxonne) asymétrique, pourvu d'un substrat comportant sur une première face des pistes conductrices peu épaisses, notamment en aluminium, de l'ordre de 10 micromètres, pour la réalisation de pistes d'interconnexion entre les différents modules ou composants électroniques d'une carte à puce intégrant l'insert, et le substrat comportant sur une seconde face des pistes plus épaisses, de l'ordre de 80 micromètres, typiquement en aluminium, pour le raccordement entre les pistes d'interconnexion et les plots de connexion d'un module électronique relativement épais. L'usinage de la cavité destinée à recevoir le module électronique se fait alors au niveau des pistes de raccordement, dont l'épaisseur est calculée en fonction de l'épaisseur du substrat du module et de la tolérance d'usinage de la cavité du module à intégrer. De cette manière il devient possible d'intégrer sur un même type d'insert des modules d'épaisseurs légèrement différentes ou nécessitant des profondeurs d'usinage légèrement différentes, les différences de profondeur d'usinage étant absorbées par l'épaisseur suffisante des pistes de raccordement.

L'invention porte par conséquent sur un objet portable communicant à fonctionnement à contact, sans contact, ou à fonctionnement mixte à contact et sans contact, comportant un corps présentant des couches de protection externes et un insert disposé entre lesdites couches de protection, ledit insert comportant un substrat portant un premier composant électronique présentant des premiers plots de connexion et portant d'autre part au moins un second composant électronique sous la forme d'un module électronique disposé dans une cavité du corps obtenue par usinage, ledit module électronique présentant des seconds plots de connexion, et ledit insert comportant en outre d'une part des pistes d'interconnexion destinées à connecter ledit premier composant électronique avec ledit module électronique pour assurer leur alimentation électrique ou le transfert de données entre eux, et d'autre part des pistes de raccordement entre ledit premier composant électronique et lesdites pistes d'interconnexion, caractérisé en ce que lesdites pistes de raccordement sont situées du même côté de l'insert que le module électronique et en ce qu'elles présentent une épaisseur au moins équivalente à la valeur absolue de la tolérance d'usinage (T) de ladite cavité.

Selon un mode de réalisation, ledit premier composant et ledit second composant électronique sont des modules électroniques et sont composés d'un substrat pourvu d'une puce microélectronique protégée par une goutte de résine d'enrobage.

Selon un mode de réalisation, l'épaisseur (notée E) des pistes de raccordement au niveau de chaque module électronique est au moins égale à la valeur absolue de la tolérance d'usinage (notée T) des cavités des modules électroniques, plus une faible marge (notée R) correspondant à l'épaisseur résiduelle des pistes de raccordement après usinage de chaque cavité afin d'assurer la continuité électrique des pistes de raccordement, ce qui se traduit alors par la relation : E = T + R.

Selon un exemple pratique de réalisation, la valeur absolue de ladite tolérance d'usinage (T) est de l'ordre de 70 micromètres et les pistes de raccordement ont une épaisseur de l'ordre de 80 µm.

En pratique, il peut exister une différence (notée D) d'épaisseur entre la valeur des épaisseurs des substrats des deux modules électroniques, dans ce cas l'épaisseur (notée E) des pistes de raccordement (29) au niveau de chaque module (11, 12) est de préférence au moins égale à la valeur absolue de la tolérance d'usinage (notée T) des cavités des modules électroniques, plus une faible marge (notée R) correspondant à l'épaisseur résiduelle des pistes de raccordement après usinage des cavités afin d'assurer leur continuité électrique, plus la différence d'épaisseur (D) des substrats des modules, ce qui se traduit par la relation : E = T + R +D.

A titre d'exemple, le substrat du premier module électronique a une épaisseur de l'ordre de 200µm, le substrat du second module électronique a une épaisseur de l'ordre de 210µm, la différence D des deux épaisseurs est de l'ordre de 10µm, et l'épaisseur des pistes de raccordement est de l'ordre de 80 + 10 = 90 micromètres.

Selon un mode de réalisation, ledit second module électronique comporte un capteur biométrique, notamment un capteur d'empreintes digitales.

Selon une variante de réalisation, ledit premier composant est une puce microélectronique montée en « flip-chip » sur l'une des faces de l'insert.

Selon un mode de réalisation, ledit premier composant électronique est un module à contact disposé sur la même face de l'objet portable que le second composant électronique, et les pistes de raccordement se confondent avec les pistes d'interconnexion entre le premier composant et le second composant.

Selon un mode de réalisation, ledit premier composant électronique est un module sans contact ou un module à double interface de communication, et l'insert comporte une antenne réalisée sous la forme de pistes conductrices situées sur l'une des faces de l'insert.

Selon un mode de réalisation, les pistes d'interconnexion sont situées sur une face du substrat.

Selon un mode de réalisation, les pistes d'interconnexion ont une épaisseur comprise entre 10 et 30 micromètres, et les pistes de raccordement ont une épaisseur comprise entre 70 et 100 micromètres.

Selon un mode de réalisation, une première extrémité de chaque piste de raccordement est connectée à un plot de connexion d'un composant électronique par une colle conductrice anisotropique.

Selon un mode de réalisation, une seconde extrémité de chaque piste de raccordement est connectée à une extrémité d'une piste d'interconnexion par l'intermédiaire d'une connexion par sertissure ou « crimp ».

Selon un mode de réalisation, l'insert comporte un substrat en polymère d'épaisseur comprise entre 25 et 250 micromètres, de préférence entre 25 et 50 micromètres, et les pistes d'interconnexion et les pistes de raccordement sont réalisées en aluminium sur ladite feuille en polymère.

Selon un mode de réalisation, ledit substrat en polymère présente deux faces opposées et les pistes d'interconnexion sont aménagées sur une première face du substrat et les pistes de raccordement sont aménagées sur une seconde face dudit substrat.

Selon un mode de réalisation, ledit premier composant électronique est un module électronique comportant une antenne de module couplée électro magnétiquement avec une antenne d'amplification située sur l'insert et couplée électro magnétiquement avec une antenne également disposée sur l'insert et assurant la liaison radiofréquence avec l'antenne du lecteur.

Selon un mode de réalisation, chaque module électronique comporte sa propre antenne de module, couplée respectivement avec une antenne d'amplification située sur l'insert et couplée électro magnétiquement avec une antenne également disposée sur l'insert et assurant la liaison radiofréquence avec l'antenne du lecteur.

Selon un mode de réalisation, l'objet portable communicant se présente sous la forme d'une carte à puce au format ID1 défini dans la norme ISO 7810, ou au format d'un passeport électronique ID3 selon la norme ISO 7810.

L'invention a également pour objet un procédé de fabrication d'un objet portable communiquant tel que défini ci-dessus, comportant des étapes consistant à préparer un insert pourvu de pistes d'une antenne, d'au moins deux modules ou composants électroniques pourvus de plots de connexion et de pistes d'interconnexion s'étendant entre lesdits modules ou composants électroniques, caractérisé en ce qu'il comporte en outre des étapes consistant à : - aménager sur une face de l'insert des pistes de raccordement d'épaisseur supérieure à l'épaisseur des pistes des antennes et des pistes d'interconnexion, chaque piste de raccordement étant disposée entre un plot de connexion des modules électroniques et une extrémité d'une piste d'interconnexion; - interconnecter les extrémités des pistes de raccordement et les extrémités des pistes d'interconnexion à l'aide de sertissures ou « crimp » ; - assembler des couches de protection de part et d'autre de l'insert de manière à former un corps de l'objet portable; - usiner une face du corps de l'objet portable de façon à y former au moins une cavité susceptible de recevoir un module électronique ; - reporter et coller à l'aide de colle conductrice anisotropique dans ladite cavité un module électronique.

D'autres caractéristiques et avantages de l'invention apparaîtront à la lecture de la description détaillée effectuée dans le cadre de l'application de l'invention à une carte à puce, et des dessins annexés dans lesquels :
- la figure 1 représente une carte à puce à contact et sans contact connue, en vue en perspective éclatée ;
- la figure 2A représente un schéma électrique d'un ensemble constitué par un lecteur de carte à puce et par une carte à puce conforme à l'invention comprenant deux modules électroniques interconnectés par des pistes conductrices;
- la figure 2B représente une vue en plan plus détaillée d'un mode de réalisation de la carte à puce représentée en figure 2A ;
- la figure 2C représente une vue en coupe simplifiée de la carte à puce selon la figure 2B, passant par les deux modules électroniques de la carte à puce ;
- la figure 2D représente une vue de détail en coupe des couches de la carte à puce de la figure 2B, avant assemblage se focalisant sur un seul module électronique;
- la figure 2E représente une vue de détail en coupe des couches de la carte à puce de la figure 2B, après assemblage ;
- la figure 3A est une vue en plan d'un insert pour carte à puce selon un mode de réalisation l'invention ;
- la figure 3B est une vue en coupe d'une carte à puce selon l'invention, intégrant un insert conforme à la figure 3A ;
- la figure 4 représente une variante du schéma électrique d'un ensemble constitué par un lecteur de carte à puce et par une carte à puce pourvue de deux modules électroniques interconnectés par des pistes conformément à l'invention, dans laquelle seul le module électronique principal est pourvu d'un concentrateur ;
- la figure 5 représente une variante du schéma électrique d'un ensemble constitué par un lecteur de carte à puce et par une carte à puce pourvue de deux modules électroniques interconnectés par des pistes conformément à l'invention, mais chacun des modules électroniques étant pourvu d'un concentrateur.

### Description détaillée

On se réfère à la Figure 1, qui représente une vue en perspective éclatée d'une carte à puce connue 10 à fonctionnement mixte à contact et sans contact. Cette carte à puce comporte un premier module électronique 11 pourvu de contacts normalisés (non représentés) selon la norme ISO 7816-1, et un second module électronique 12, qui comporte notamment des capteurs biométriques tels que des capteurs d'empreintes digitales (non représentés). Le premier module électronique 11 comporte une puce microélectronique (non représentée) qui stocke de façon sécurisée des informations d'identification du porteur de carte, en particulier des empreintes biométriques de référence du porteur de carte. Afin d'autoriser une transaction avec la carte à puce 10, l'utilisateur doit soumettre son empreinte biométrique au second module électronique 12, et cette empreinte doit ensuite être transmise de façon sécurisée au premier module électronique 11. Il est donc nécessaire de mettre en place un canal de communication entre les premier et second modules électroniques 11, 12.

A cet effet, la carte à puce connue 10 comporte un circuit imprimé 13 (ou PCB pour "Printed Circuit Board" en terminologie anglo-saxonne) permettant d'établir un circuit complexe entre les deux modules 11,12, réalisant aussi bien l'alimentation électrique du second module 12 par le premier module 11, et la communication de données entre les deux modules 11, 12. Dans l'état actuel de la technique, ce circuit imprimé 13 comporte des composants électroniques discrets (non représentés) et est intégré entre des faces externes 15, 16 de la carte à puce, ce qui est plus compliqué et plus coûteux à réaliser que de simplement reporter un module électronique unique dans une cavité aménagée dans un corps de carte monolithique, tel que cela est couramment pratiqué pour les cartes à puces pourvues d'un module électronique unique.

En figure 2A on a représenté un schéma électrique d'un ensemble constitué par une carte à puce 20 pourvue de deux modules électroniques 11, 12 interconnectés par des pistes conductrices 21, 22, 23, 24, et par un lecteur de carte à puce 27. En l'occurrence, il s'agit d'une carte à puce 20 de type à fonctionnement sans contact, pourvue d'une antenne 25 qui lui permet d'établir une liaison radiofréquence par couplage inductif avec l'antenne 26 d'un lecteur distant 27.

En revanche, les deux modules électroniques 11, 12, à savoir par exemple un module principal 11 classique de carte à puce et un module 12 biométrique, sont reliés entre eux par des liaisons galvaniques, à savoir des pistes conductrices 21, 22 qui servent à l'émission et à la réception de données, et des pistes conductrices 23, 24 qui servent à l'alimentation électrique du module biométrique 12 par le module principal 11, qui capte son énergie à partir de la liaison inductive avec le lecteur 27.

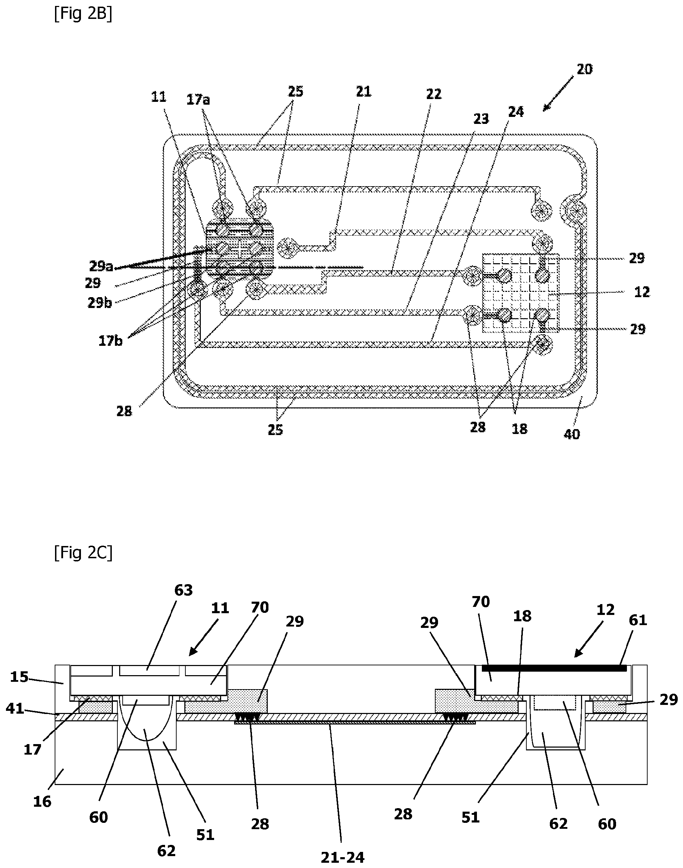

La figure 2B donne une vue en plan d'un schéma de réalisation de la carte à puce 20 de la figure 2A. Le module électronique principal 11 comporte de façon connue six plots de connexion 17, à savoir d'une part deux plots de connexion 17a qui sont connectés à une première extrémité des pistes de l'antenne 25 de la carte à puce, qui est une antenne au format dit « ID1 » qui est proche de la taille de la carte à puce et qui longe les bords du corps de carte, et d'autre part quatre plots de connexion 17b qui sont connectés à une première extrémité de chacune des pistes 21, 22, 23, 24 d'interconnexion entre les deux modules électroniques 11, 12. Le module électronique biométrique 12 comporte quatre plots de connexion 18 qui sont connectés aux secondes extrémités des pistes 21, 22, 23, 24 d'interconnexion entre les deux modules électroniques 11, 12.

Afin de simplifier et de fiabiliser la fabrication de la carte à puce 20 selon l'invention, les pistes de l'antenne 25 et les pistes d'interconnexion 21, 22, 23, 24 sont de préférence réalisées de façon similaire. Il s'agit notamment de fines pistes en aluminium, d'une épaisseur de l'ordre de 10 micromètres, réalisées sur une face d'un insert 40, par exemple par gravure chimique.

Cependant, compte tenu des différences d'épaisseur des modules électroniques 11, 12 et de la position de leurs plots de connexion 17, 18 qui peuvent ne pas être dans un même plan, il est nécessaire de recourir à des mesures particulières pour connecter de manière efficace les extrémités de l'antenne 25 et des pistes d'interconnexion 21, 22, 23, 24 aux plots de connexion 17, 18 respectifs des modules électroniques 11, 12.

A cet effet, l'invention prévoit d'utiliser des pistes conductrices de raccordement 29, plus épaisses que les pistes 25 d'antenne et les pistes d'interconnexion 21, 22, 23, 24 des modules 11, 12. Ces pistes de raccordement 29 sont dimensionnées en 3D (c'est-à-dire selon un axe Z correspondant à l'épaisseur de la carte à puce et perpendiculaire au plan X-Y de la carte à puce) et sont d'épaisseur suffisante pour pouvoir compenser ou rattraper les différences de localisation sur l'axe Z entre les extrémités des pistes d'antenne 25, des pistes d'interconnexion 21-24, et les plots de connexion 17, 18 correspondants situés sur les modules électroniques 11, 12. En d'autres termes, on peut dire que les pistes de raccordement 29 sont des pistes s'étendant en 3D entre les extrémités des pistes d'antenne 25 ou d'interconnexion 21-24, et les plots de connexion 17, 18 correspondants situés sur les modules électroniques 11, 12.

Par ailleurs, les pistes de raccordement 29 sont usinables et destinées à être usinées lors de la formation des cavités pour l'insertion des modules électroniques 11, 12 dans un corps de carte.

Comme les modules 11, 12 sont positionnés dans des cavités 51 usinées dans le corps de carte, pour que les pistes de raccordement 29 puissent jouer leur rôle et venir en contact avec les plots de connexion 17, 18 des modules 11, 12, il est nécessaire que l'épaisseur des pistes de raccordement 29 soit suffisante, au niveau de chaque module, pour que dans tous les cas de figure la profondeur du plan P1 de la cavité (correspondant à la zone d'appui des plots de connexion du module) atteigne les pistes de raccordement 29 lors de l'usinage de la cavité, mais sans traverser ces pistes de raccordement 29 et éliminer toute leur épaisseur lors de l'opération d'usinage. Il est donc essentiel que l'épaisseur (notée E) des pistes de raccordement 29 au niveau de chaque module 11, 12 soit au moins égale à la valeur absolue de la tolérance d'usinage des cavités 51 des modules 11, 12 (notée T), plus une faible marge (notée R) correspondant à l'épaisseur résiduelle de la piste de raccordement après usinage de la cavité afin d'assurer sa continuité électrique, ce qui se traduit alors par la relation E = T + R. Ainsi, à titre d'exemple, si la cavité 51 d'un module doit être usinée à une profondeur P1 +/- 35 micromètres, l'épaisseur recommandée de la piste de raccordement 29 sera par exemple de l'ordre de 80 micromètres.

Si en pratique il existe une différence D d'épaisseur entre la valeur des épaisseurs des substrats des deux modules, l'épaisseur E recommandée plus haut de la piste de raccordement 29 devrait alors être augmentée de la valeur de cette différence D. La valeur recommandée de l'épaisseur E de la piste de raccordement 29 sera alors égale à T + R + D. Par exemple, si le premier module 11 a une épaisseur de substrat de 200µm et le second module 12 a une épaisseur de 210µm, alors la différence D est égale à 10µm, et l'épaisseur recommandée de la piste de raccordement 29 sera de l'ordre de 80 + 10 = 90 micromètres.

Selon l'invention, les pistes de raccordement 29 sont réalisées sur l'insert 40 et positionnées du même côté de la carte à puce que les modules électroniques 11, 12, lorsque ceux-ci seront assemblés sur la carte à puce, alors que les pistes d'antenne 25 et les pistes d'interconnexion 21-24 sont réalisées sur la face opposée de l'insert 40. Les extrémités 29b des pistes de raccordement 29 et les extrémités des pistes d'interconnexion 21-24 sont interconnectées par exemple à l'aide de sertissures ou « crimp » 28.

En pratique, les pistes de raccordement 29 auront généralement une épaisseur de l'ordre de 70 à 100 micromètres, dans le cas d'une carte à puce ayant une épaisseur de l'ordre de 800 micromètres.

Les pistes de raccordement 29 ont une première extrémité 29a qui est positionnée en face d'un plot de connexion 17, 18 correspondant des modules électroniques 11, 12. Cette première extrémité 29a est usinée en partie lors de l'usinage de la cavité de réception 51 de chaque module électronique. Cet usinage permet de ramener localement l'épaisseur de l'extrémité 29a de la piste de raccordement 29 au niveau exact prévu pour le positionnement des plots de connexion 17, 18 des modules électroniques 11, 12. La surface usinée de cette première extrémité 29a peut alors être connectée électriquement au plot de connexion correspondant 17, 18 d'un module 11, 12 au moyen d'une fine couche de colle conductrice anisotropique, notée ACF, que l'on peut dispenser en même temps que la dispense de la colle de fixation de chaque module électronique 11, 12 dans sa cavité respective du corps de carte.

Dans le cas d'une carte à puce à fonctionnement sans contact et donc pourvue d'une antenne 25 (figure 2B), les pistes de raccordement 29 ont une seconde extrémité 29b qui est positionnée en regard d'une extrémité de l'une des pistes d'antenne 25 ou des pistes d'interconnexion 21-24. Ladite seconde extrémité 29b des pistes de raccordement 29 est connectée à l'extrémité correspondante d'une piste d'antenne 25 ou d'une piste d'interconnexion 21-24 par l'intermédiaire d'un via métallique, ou d'un raccord par sertissure 28, encore appelé « crimp » en terminologie anglo-saxonne.

La figure 2C représente une vue en coupe de la carte à puce 20 de la figure 2B, passant par les deux modules 11, 12. Il est à noter que compte tenu de la faible épaisseur des différentes couches de la carte à puce, les épaisseurs ont été représentées de façon agrandie, et elles ne sont pas à l'échelle.

Le premier module électronique 11 est un module classique à double interface de communication, comportant un substrat 70 et sur sa face supérieure des contacts 63 au format ISO 7816. Une puce microélectronique 60 est fixée sous le substrat 70 et protégée par une goutte de résine d'encapsulation 62. Les bornes de sortie de la puce microélectronique 60 sont connectées à des plots de connexion 17 du module 11.

Le second module électronique 12 est un module de structure similaire mais comportant en face supérieure un capteur biométrique 61, par exemple un capteur d'empreintes digitales. La puce 60 de ce module est connectée à des plots de connexion 18 du module 12. Les plots de connexion 17, 18 sont connectés à des pistes de raccordement 29 respectives, qui sont interconnectées par des pistes d'interconnexion 21-24 via des sertissures ou « crimps » 28.

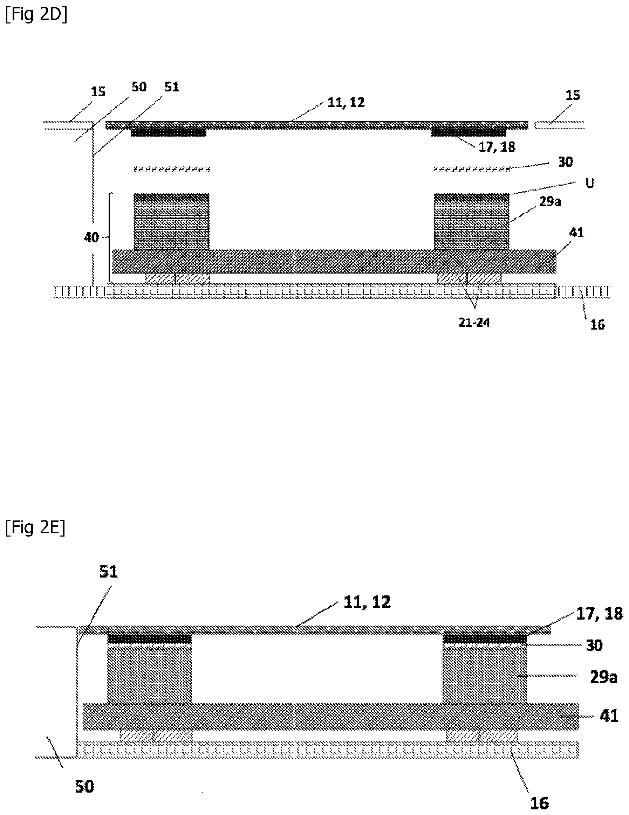

Les figures 2D et 2E correspondent à une coupe partielle de la carte à puce de la figure 2B au niveau du module électronique 11 selon le trait de coupe en trait pointillé de la figure 2B. La figure 2D représente une vue éclatée, correspondant à la situation avant assemblage de la carte à puce 20. Le corps de carte 50 comporte une couche de protection supérieure 15, une couche de protection inférieure 16, et un insert 40 intercalé entre ces deux couches. L'insert 40 est inséré dans une cavité 51 du corps de carte et obturé en face supérieure 15 par le module électronique 11. La structure est la même au niveau de la partie du corps de carte qui porte le module biométrique 12, non représentée dans cette figure.

L'insert 40 comporte un substrat 41 en matière plastique sur lequel on a réalisé sur une face, par exemple la face inférieure, des pistes conductrices 21-24 notamment en aluminium, pour l'interconnexion des modules 11, 12. La face supérieure du substrat 41 porte les pistes de raccordement 29 conformément à l'invention. Elles sont également en aluminium, plus épaisses que les pistes d'interconnexion 21-24. Leur partie supérieure U correspond à la zone qui sera usinée lors de l'usinage de la cavité 51. Lors du report du module électronique 11 dans la cavité 51 du corps de carte, les plots de connexion 17, 18 respectivement du module 11 ou du module 12 seront collés sur la face supérieure des extrémités 29a des pistes de raccordement 29, au moyen d'une fine couche de colle conductrice anisotropique 30.

La figure 2E représente la même structure que la figure 2D, après report des modules 11, 12 dans le corps de carte 50. Comme on le voit, la partie supérieure U de la piste de raccordement 29 représentée dans la figure 2C a disparu, puisqu'elle a été usinée lors de l'usinage de chacune des cavités 51. Cet usinage se fait à une profondeur adaptée à l'épaisseur éventuellement différente entre les modules 11, 12.

Plus précisément, les pistes de raccordement 29 sont conçues pour présenter à l'origine une épaisseur supérieure pour tenir compte des tolérances T d'usinage de la cavité, ce qui les fait empiéter dans la zone prévue pour les cavités des modules. Grâce à l'étape d'usinage des cavités, on réduit la surépaisseur des extrémités 29a des pistes de raccordement 29 jusqu'à adapter l'épaisseur finale de ces pistes de raccordement à l'épaisseur de chaque module, à savoir celle du module principal 11 d'identification et celle du second module électronique 12.

Ainsi, après cette étape d'usinage de chaque cavité 51, les surfaces usinées des extrémités des pistes de raccordement 29 sont situées au fond des cavités exactement à une profondeur correspondant à l'épaisseur du substrat de chaque module 11, 12 au niveau de ses plots de connexion, ce qui permet une insertion et un collage précis de chaque module, même lorsque ceux-ci ont des épaisseurs différentes.

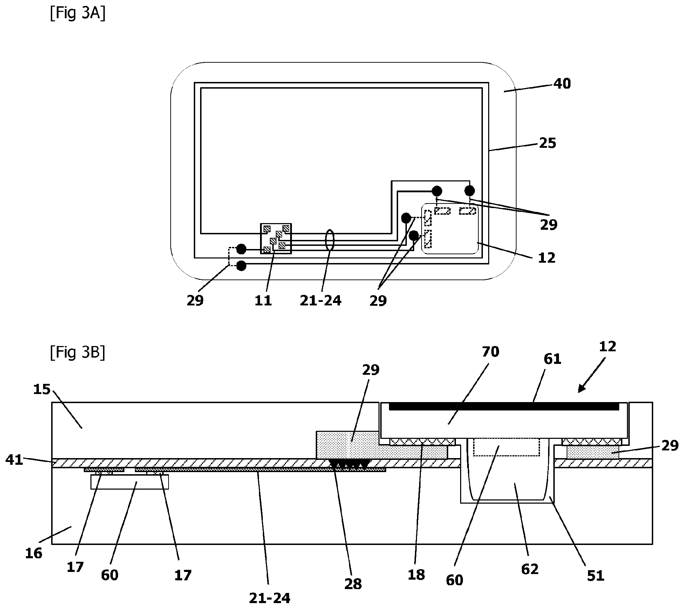

En figures 3A et 3B on a représenté une variante de réalisation de l'invention, jouant sur le type de modules électroniques ou de composants électroniques intégrés à la carte à puce.

Dans ces figures 3A et 3B, la carte à puce est pourvue d'un composant principal 11 sous la forme d'une puce microélectronique directement connectée en « flip-chip » sur la face inférieure du substrat 41 de l'insert 40, et d'un composant secondaire formé par un module biométrique 12. La surface supérieure de ce module biométrique intègre un capteur d'empreintes 61. Il comporte une puce microélectronique 60 protégée par une goutte de résine d'encapsulation 62 logée dans la cavité 51 du corps de carte. Comme visible sur la figure 3B, l'usinage du plan dit « P1 » de la cavité 51, correspondant à l'épaisseur du substrat du module 12, a entamé localement l'épaisseur des pistes de raccordement 29, et les plots de contact 18 du module sont alors électriquement connectés aux pistes d'interconnexion 21-24 via les pistes de raccordement 29, et les crimps ou sertissures 28.

Dans un autre mode de réalisation (non représenté), on peut proposer une carte à puce à fonctionnement à contact seul, comportant deux modules électroniques disposés sur une même face de la carte à puce. Dans ce cas de figure, on peut utiliser un insert simple face métallisé sur une face unique, et alors les pistes de raccordement et d'interconnexion entre les modules peuvent se confondre et présenter la même épaisseur, à savoir celle qui est au moins égale à la tolérance d'usinage T des cavités plus une marge R, comme expliqué plus haut.

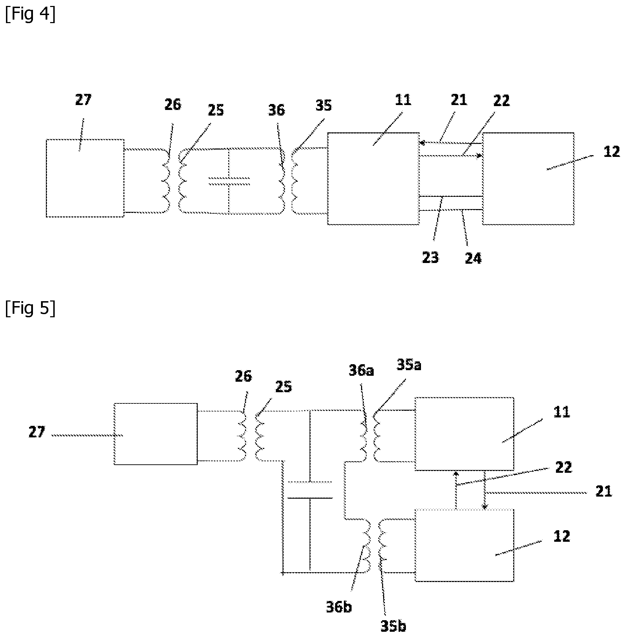

En figure 4 on a représenté une variante du schéma électrique d'un ensemble constitué par un lecteur de carte à puce 27 et par une carte à puce 20 pourvue de deux modules électroniques 11, 12 interconnectés par des pistes 21-24 conformément à l'invention. Dans ce mode de réalisation de l'invention, le module électronique principal 11 est pourvu d'une antenne 35 de module, couplée avec une antenne 36 de concentrateur, elle-même couplée électro magnétiquement avec l'antenne principale 25 au format ID1. Cette dernière a son tour est couplée à l'antenne 26 d'un lecteur de carte à puce distant 27. Par conséquent, dans ce mode de réalisation, les interconnexions entre les pistes 21-24 et les plots de connexion 17, 18 correspondants des modules électroniques 11, 12 se font à nouveau à l'aide de pistes de raccordement 29 (non représentées), exactement de la même manière que dans le mode de réalisation de base correspondant à la figure 2.

En figure 5 on a représenté une autre variante du schéma électrique d'un ensemble constitué par un lecteur de carte à puce 27 et par une carte à puce 20 pourvue de deux modules électroniques 11, 12 interconnectés par des pistes d'interconnexion conformément à l'invention. Dans ce mode de réalisation, aussi bien le module électronique principal 11 que le module biométrique 12 est pourvu de sa propre antenne de module 35a, 35b couplée à un concentrateur respectif 36a, 36b et chaque module 11, 12 est donc alimenté en énergie par couplage électro magnétique entre l'antenne 25 de la carte à puce et l'antenne 27 du lecteur. Dans ce cas de figure, les deux modules électroniques 11, 12 ne sont plus interconnectés galvaniquement que par des pistes d'interconnexion 21-22 assurant le transfert de données. Ces deux interconnexions 21, 22 peuvent encore être réalisées par des pistes de raccordement 29 (non représentées), comme décrit précédemment en lien avec le mode de réalisation de la figure 2.

### Avantages de l'invention

En définitive, l'invention propose un objet portable communicant, notamment une carte à puce 20 ou un passeport électronique, permettant d'atteindre les buts visés. En particulier, l'utilisation d'un insert pourvu de pistes de raccordement 29 en surépaisseur et usinables localement jusqu'à une épaisseur tenant compte des tolérances d'usinage des cavités et adaptée à l'épaisseur de chaque module électronique, permet d'interconnecter de façon plus efficace les modules électroniques sans avoir recours à un circuit imprimé PCB, ce qui contribue à diminuer le coût de fabrication de la carte à puce et à augmenter le rendement de fabrication.

En outre, la structure de la carte à puce selon l'invention est compatible avec les procédés de fabrication usuels à faible coût et haut rendement, consistant à usiner des cavités dans le corps de carte puis à intégrer des modules électroniques dans ces cavités superficielles du corps de carte.

La technologie proposée permet d'intégrer dans la carte à puce ou dans un dispositif communicant équivalent, un insert déjà doté de composants pouvant entrer en connexion avec un module encarté selon l'invention.

## Revendications

1. Objet portable communicant (20) à fonctionnement à contact, sans contact, ou à fonctionnement mixte à contact et sans contact, comportant un corps (50) présentant des couches de protection externes (15,16) et un insert (40) disposé entre lesdites couches de protection, ledit insert (40) comportant un substrat (41) portant un premier composant électronique (11 ; 60) présentant des premiers plots de connexion (17) et portant d'autre part au moins un second composant électronique sous la forme d'un module électronique (12) disposé dans une cavité (51) du corps (50) obtenue par usinage, ledit module électronique (12) présentant des seconds plots de connexion (18), et ledit insert (40) comportant en outre d'une part des pistes d'interconnexion (21, 22, 23, 24) destinées à connecter ledit premier composant électronique (11 ; 60) avec ledit module électronique (12) pour assurer leur alimentation électrique ou le transfert de données entre eux, et d'autre part des pistes de raccordement (29) entre ledit premier composant électronique (11; 60) et lesdites pistes d'interconnexion (21, 22, 23, 24), **caractérisé en ce que** lesdites pistes de raccordement (29) sont situées du même côté de l'insert (40) que le module électronique (12) et sont destinées à être usinées lors de la réalisation de la cavité (51), et **en ce qu'**elles sont dimensionnées en 3D selon un axe Z correspondant à l'épaisseur de l'objet portable communicant (20) perpendiculairement à son plan X-Y, et **en ce que** lesdites pistes de raccordement (29) sont d'épaisseur (notée E) suffisante pour pouvoir compenser ou rattraper les différences de localisation sur l'axe Z entre les extrémités des pistes d'antenne (25) ou des pistes d'interconnexion (21-24) et les plots de connexion (17, 18) correspondants situés sur les modules électroniques (11, 12).

2. Objet portable communicant (20) selon la revendication 1, **caractérisé en ce que** ledit premier composant (11) est un module électronique similaire au module électronique (12), les deux modules électroniques (11, 12) étant composés d'un substrat (70) pourvu d'une puce microélectronique (60) protégée par une goutte de résine d'enrobage (62).

3. Objet portable communicant (20) selon la revendication 2, **caractérisé en ce que** l'épaisseur (notée E) des pistes de raccordement (29) au niveau de chaque module électronique (11, 12) est au moins égale à la valeur absolue de la tolérance d'usinage (notée T) des cavités (51) des modules (11, 12), plus une faible marge (notée R) correspondant à l'épaisseur résiduelle des pistes de raccordement (29) après usinage des cavités (51) afin d'assurer la continuité électrique des pistes de raccordement, ce qui se traduit alors par la relation : E = T + R.

4. Objet portable communicant (20) selon l'une quelconque des revendications 1 à 3, **caractérisé en ce que** la valeur absolue de ladite tolérance d'usinage (T) est de l'ordre de 70 micromètres et **en ce que** les pistes de raccordement (29) ont une épaisseur de l'ordre de 80 µm.

5. Objet portable communicant (20) selon l'une quelconque des revendications 2 à 4 , dans lequel il existe une différence (notée D) d'épaisseur entre la valeur des épaisseurs des substrats (70) des deux modules électroniques (11, 12), **caractérisé en ce que** l'épaisseur (notée E) des pistes de raccordement (29) au niveau de chaque module (11, 12) est au moins égale à la valeur absolue de la tolérance d'usinage (notée T) des cavités (51) des modules (11, 12), plus une faible marge (notée R) correspondant à l'épaisseur résiduelle des pistes de raccordement (29) après usinage des cavités (51) afin d'assurer leur continuité électrique, plus la différence d'épaisseur (D), ce qui se traduit par la relation : E = T + R + D.

6. Objet portable communicant (20) selon la revendication 5, **caractérisé en ce que** le substrat (70) du premier module électronique (11) a une épaisseur de l'ordre de 200µm, le substrat (70) du second module électronique (12) a une épaisseur de l'ordre de 210µm, la différence D des deux épaisseurs est de l'ordre de 10µm, et l'épaisseur des pistes de raccordement (29) est de l'ordre de 80 + 10 = 90 micromètres.

7. Objet portable communicant (20) selon l'une quelconque des revendications 2 à 6, **caractérisé en ce que** ledit second module électronique (12) comporte un capteur biométrique, notamment un capteur d'empreintes digitales.

8. Objet portable communicant (20) selon la revendication 1, **caractérisé en ce que** ledit premier composant est une puce microélectronique (60) montée en « flip-chip » sur l'une des faces de l'insert (40).

9. Objet portable communicant (20) selon l'une des revendications 1 à 2, **caractérisé en ce que** ledit premier composant électronique (11) est un module à contact disposé sur la même face de l'objet portable que le second composant électronique (12), et **en ce que** les pistes de raccordement (29) se confondent avec les pistes d'interconnexion (21, 22, 23, 24) entre le premier composant (11) et le second composant (12).

10. Objet portable communicant (20) selon l'une des revendications 2 à 8, ledit premier composant électronique (11) étant un module sans contact ou un module à double interface de communication, **caractérisé en ce que** l'insert (40) comporte une antenne (25) réalisée sous la forme de pistes situées sur l'une des faces de l'insert (40).

11. Objet portable communicant (20) selon l'une quelconque des revendications précédentes, **caractérisé en ce que** les pistes d'interconnexion (21, 22, 23, 24) sont situées sur une face du substrat (41).

12. Objet portable communicant (20) selon l'une quelconque des revendications précédentes, **caractérisé en ce que** les pistes d'interconnexion (21, 22, 23, 24) ont une épaisseur comprise entre 10 et 30 micromètres, et **en ce que** lesdites pistes de raccordement (29) ont une épaisseur comprise entre 70 et 100 micromètres.

13. Objet portable communicant (20) selon l'une quelconque des revendications précédentes, **caractérisé en ce qu'**une première extrémité (29a) de chaque piste de raccordement (29) est connectée à un plot de connexion (17, 18) d'un composant électronique (11, 12) par une colle conductrice anisotropique.

14. Objet portable communicant (20) selon l'une quelconque des revendications précédentes, **caractérisé en ce qu'**une seconde extrémité (29b) de chaque piste de raccordement (29) est connectée à une extrémité d'une piste d'interconnexion (21, 22, 23, 24) par l'intermédiaire d'une connexion (28) par sertissure ou « crimp ».

15. Objet portable communicant (20) selon l'une quelconque des revendications précédentes, **caractérisé en ce que** l'insert (40) comporte un substrat (41) en polymère d'épaisseur comprise entre 25 et 250 micromètres, de préférence entre 25 et 50 micromètres, et **en ce que** les pistes d'interconnexion (21, 22, 23, 24) et les pistes de raccordement (29) sont réalisées en aluminium sur ladite feuille en polymère.

16. Objet portable communicant (20) selon l'une quelconque des revendications précédentes, **caractérisé en ce que** ledit substrat (41) en polymère présente deux faces opposées et **en ce que** les pistes d'interconnexion (21, 22, 23, 24) sont aménagées sur une première face et que les pistes de raccordement (29) sont aménagées sur une seconde face dudit substrat (41).

17. Objet portable communicant (20) selon l'une quelconque des revendications 2 à 6, **caractérisé en ce que** ledit premier composant électronique (11) est un module électronique comportant une antenne de module (35) couplée électro magnétiquement avec une antenne d'amplification (36) située sur l'insert (40) et couplée électro magnétiquement avec une antenne (25) également disposée sur l'insert (40) et assurant la liaison radiofréquence avec l'antenne (26) du lecteur (27).

18. Objet portable communicant (20) selon l'une quelconque des revendications 2 à 6, **caractérisé en ce que** chaque module électronique (11, 12) comporte sa propre antenne de module (35a, 35b), couplée respectivement avec une antenne d'amplification (36a, 36b) située sur l'insert (40) et couplée électro magnétiquement avec une antenne (25) également disposée sur l'insert (40) et assurant la liaison radiofréquence avec l'antenne (26) du lecteur (27).

19. Objet portable communicant (20) selon l'une quelconque des revendications précédentes, **caractérisé en ce qu'**il se présente sous la forme d'une carte à puce au format ID1 défini dans la norme ISO 7810, ou au format d'un passeport électronique ID3 selon la norme ISO 7810.

20. Procédé de fabrication d'un objet portable communiquant (20) selon l'une quelconque des revendications précédentes, comportant des étapes consistant à préparer un insert (40) pourvu de pistes d'une antenne (25 ; 35 ; 35a, 35b), d'au moins deux modules ou composants électroniques (11, 12 ; 60) pourvus de plots de connexion (17, 18) et de pistes d'interconnexion (21, 22, 23, 24) s'étendant entre lesdits modules ou composants électroniques, **caractérisé en ce qu'**il comporte en outre des étapes consistant à :
- aménager sur une face de l'insert (40) des pistes de raccordement (29) d'épaisseur supérieure à l'épaisseur des pistes des antennes (25 ; 35 ; 35a, 35b) et des pistes d'interconnexion (21, 22, 23, 24), chaque piste de raccordement (29) étant disposée entre un plot de connexion (17, 18) des modules électroniques (11, 12) et une extrémité d'une piste d'interconnexion (21, 22 ; 23, 24) ;
- interconnecter les extrémités (29b) des pistes de raccordement (29) et les extrémités des pistes d'interconnexion (21, 22, 23, 24) à l'aide de sertissures ou « crimp » ;
- assembler des couches de protection (15, 16) de part et d'autre de l'insert (40) de manière à former un corps (50) de l'objet portable (20);
- usiner une face du corps (50) de l'objet portable (20) de façon à y former au moins une cavité (51) susceptible de recevoir un module électronique (11, 12) ;
- reporter et coller à l'aide de colle conductrice anisotropique dans ladite cavité (51) un module électronique (11, 12).

## Patentansprüche

1. Tragbares kommunizierendes Objekt (20) mit kontaktbehaftetem, kontaktlosem oder mit gemischtem kontaktbehaftetem und kontaktlosem Betrieb, das einen Körper (50) aufweist, der äußere Schutzschichten (15,16) und einen zwischen den Schutzschichten angeordneten Einsatz (40) beinhaltet, wobei der Einsatz (40) ein Substrat (41) aufweist, das eine erste elektronische Komponente (11 ; 60) trägt, die erste Verbindungsstifte (17) beinhaltet, und des Weiteren mindestens eine zweite elektronische Komponente in Form eines in einer Bearbeitung hergestellten Hohlraums (51) des Körpers (50) angeordneten elektronischen Moduls (12) trägt, wobei das elektronische Modul (12) zweite Verbindungsstifte (18) beinhaltet, und der Einsatz (40) ferner einerseits Verbindungsbahnen (21, 22, 23, 24), die zum Verbinden der ersten elektronischen Komponente (11 ; 60) mit dem elektronischen Modul (12) bestimmt sind, um deren Stromversorgung oder die Datenübertragung untereinander zu gewährleisten, und andererseits Anschlussbahnen (29) zwischen der ersten elektronischen Komponente (11 ; 60) und den Verbindungsbahnen (21, 22, 23, 24) aufweist, **dadurch gekennzeichnet, dass** sich die Anschlussbahnen (29) auf derselben Seite des Einsatzes (40) wie das elektronische Modul (12) befinden und bei dem Bearbeiten des Hohlraums (51) bearbeitet werden sollen und dass sie in 3D entlang einer Z-Achse bemessen sind, die der Dicke des tragbaren kommunizierenden Objekts (20) senkrecht zu seiner X-Y-Ebene entspricht, und dass die Anschlussbahnen (29) eine Dicke (E) haben, die ausreichend ist, um die Lagedifferenzen auf der Z-Achse zwischen den Enden der Antennenbahnen (25) oder der Verbindungsbahnen (21-24) und den entsprechenden Verbindungsstiften (17, 18) auf den elektronischen Modulen (11, 12) auszugleichen oder nachzuholen.

2. Tragbares kommunizierendes Objekt (20) nach Anspruch 1, **dadurch gekennzeichnet, dass** die erste Komponente (11) ein dem elektronischen Modul (12) ähnliches elektronisches Modul ist, wobei die beiden elektronischen Module (11, 12) aus einem Substrat (70) bestehen, das mit einem mikroelektronischen Chip (60) versehen ist, der durch einen Tropfen Einbettharz (62) geschützt ist.

3. Tragbares kommunizierendes Objekt (20) nach Anspruch 2, **dadurch gekennzeichnet, dass** die Dicke (E) der Anschlussbahnen (29) an jedem elektronischen Modul (11, 12) mindestens gleich dem absoluten Wert der Bearbeitungstoleranz (als T bezeichnet) der Hohlräume (51) der Module (11, 12) plus einem geringen Spielraum (R) ist, der der Restdicke der Anschlussbahnen (29) nach dem Bearbeiten der Hohlräume (51) entspricht, um die elektrische Durchgängigkeit der Verbindungsbahnen zu gewährleisten, was sich dann in folgendem Verhältnis widerspiegelt: E = T + R.

4. Tragbares kommunizierendes Objekt (20) nach einem der Ansprüche 1 bis 3, **dadurch gekennzeichnet, dass** der absolute Wert der Bearbeitungstoleranz (T) im Bereich von 70 Mikrometern liegt und dass die Anschlussbahnen (29) eine Dicke im Bereich von 80 µm haben.

5. Tragbares kommunizierendes Objekt (20) nach einem der Ansprüche 2 bis 4, wobei eine Differenz (als D bezeichnet) in der Dicke zwischen dem Wert der Dicke der Substrate (70) der beiden elektronischen Module (11, 12) besteht, **dadurch gekennzeichnet, dass** die Dicke (als E bezeichnet) der Anschlussbahnen (29) an jedem Modul (11, 12) mindestens gleich dem absoluten Wert der Bearbeitungstoleranz (als T bezeichnet) der Hohlräume (51) der Module (11, 12) plus einem geringen Spielraum (als R bezeichnet) ist, der der Restdicke der Anschlussbahnen (29) nach dem Bearbeiten der Hohlräume (51) entspricht, um ihre elektrische Durchgängigkeit zu gewährleisten, plus die Dickendifferenz (D), was sich in folgendem Verhältnis widerspiegelt: E = T + R + D.

6. Tragbares kommunizierendes Objekt (20) nach Anspruch 5, **dadurch gekennzeichnet, dass** das Substrat (70) des ersten elektronischen Moduls (11) eine Dicke im Bereich von 200 µm hat, das Substrat (70) des zweiten elektronischen Moduls (12) eine Dicke im Bereich von 210 µm hat, die Differenz D der beiden Dicken im Bereich von 10 µm liegt und die Dicke der Anschlussbahnen (29) im Bereich von 80 + 10 = 90 Mikrometern liegt.

7. Tragbares kommunizierendes Objekt (20) nach einem der Ansprüche 2 bis 6, **dadurch gekennzeichnet, dass** das zweite elektronische Modul (12) einen biometrischen Sensor, insbesondere einen Fingerabdrucksensor, umfasst.

8. Tragbares kommunizierendes Objekt (20) nach Anspruch 1, **dadurch gekennzeichnet, dass** die erste Komponente ein mikroelektronischer Chip (60) ist, der als "Flip-Chip" auf einer der Seiten des Einsatzes (40) montiert ist.

9. Tragbares kommunizierendes Objekt (20) nach einem der Ansprüche 1 bis 2, **dadurch gekennzeichnet, dass** die erste elektronische Komponente (11) ein Kontaktmodul ist, das auf derselben Seite des tragbaren Objekts wie die zweite elektronische Komponente (12) angeordnet ist, und dass die Anschlussbahnen (29) mit den Verbindungsbahnen (21, 22, 23, 24) zwischen der ersten Komponente (11) und der zweiten Komponente (12) verschmelzen.

10. Tragbares kommunizierendes Objekt (20) nach einem der Ansprüche 2 bis 8, wobei die erste elektronische Komponente (11) ein kontaktloses Modul oder ein Modul mit doppelter Kommunikationsschnittstelle ist, **dadurch gekennzeichnet, dass** der Einsatz (40) eine in Form von Bahnen ausgeführte Antenne (25) auf einer der Seiten des Einsatzes (40) aufweist.

11. Tragbares kommunizierendes Objekt (20) nach einem der vorhergehenden Ansprüche, **dadurch gekennzeichnet, dass** sich die Verbindungsbahnen (21, 22, 23, 24) auf einer Seite des Substrats (41) befinden.

12. Tragbares kommunizierendes Objekt (20) nach einem der vorhergehenden Ansprüche, **dadurch gekennzeichnet, dass** die Verbindungsbahnen (21, 22, 23, 24) eine Dicke zwischen 10 und 30 Mikrometer haben, und dass die Anschlussbahnen (29) eine Dicke zwischen 70 und 100 Mikrometer haben.

13. Tragbares kommunizierendes Objekt (20) nach einem der vorhergehenden Ansprüche, **dadurch gekennzeichnet, dass** ein erstes Ende (29a) jeder Anschlussbahn (29) mit einem Verbindungsstift (17, 18) einer elektronischen Komponente (11, 12) durch einen anisotropen leitenden Klebstoff verbunden ist.

14. Tragbares kommunizierendes Objekt (20) nach einem der vorhergehenden Ansprüche, **dadurch gekennzeichnet, dass** ein zweites Ende (29b) jeder Anschlussbahn (29) über eine Press- oder "Crimp"- Verbindung (28) mit einem Ende einer Verbindungsbahn (21, 22, 23, 24) verbunden ist.

15. Tragbares kommunizierendes Objekt (20) nach einem der vorhergehenden Ansprüche, **dadurch gekennzeichnet, dass** der Einsatz (40) ein Polymersubstrat (41) mit einer Dicke zwischen 25 und 250 Mikrometern, vorzugsweise zwischen 25 und 50 Mikrometern, aufweist und dass die Verbindungsbahnen (21, 22, 23, 24) und die Anschlussbahnen (29) auf der Polymerfolie aus Aluminium ausgeführt sind.

16. Tragbares kommunizierendes Objekt (20) nach einem der vorhergehenden Ansprüche, **dadurch gekennzeichnet, dass** das Polymersubstrat (41) zwei gegenüberliegende Seiten beinhaltet und dass die Verbindungsbahnen (21, 22, 23, 24) auf einer ersten Seite angeordnet sind und die Anschlussbahnen (29) auf einer zweiten Seite des Substrats (41) angeordnet sind.

17. Tragbares kommunizierendes Objekt (20) nach einem der Ansprüche 2 bis 6, **dadurch gekennzeichnet, dass** die erste elektronische Komponente (11) ein elektronisches Modul ist, das eine Modulantenne (35) aufweist, die elektromagnetisch mit einer Verstärkungsantenne (36) an dem Einsatz (40) und elektromagnetisch mit einer ebenfalls an dem Einsatz (40) angeordneten Antenne (25) gekoppelt ist und die Funkfrequenzverbindung mit der Antenne (26) des Lesers (27) gewährleistet.

18. Tragbares kommunizierendes Objekt (20) nach einem der Ansprüche 2 bis 6, **dadurch gekennzeichnet, dass** jedes elektronische Modul (11, 12) eine eigene Modulantenne (35a, 35b) aufweist, die jeweils mit einer an dem Einsatz (40) befindlichen Verstärkungsantenne (36a, 36b) gekoppelt und elektromagnetisch mit einer ebenfalls an dem Einsatz (40) angeordneten Antenne (25) gekoppelt ist und die Funkfrequenzverbindung mit der Antenne (26) des Lesers (27) gewährleistet.

19. Tragbares kommunizierendes Objekt (20) nach einem der vorhergehenden Ansprüche, **dadurch gekennzeichnet, dass** es sich in Form einer Chipkarte in dem in der Norm ISO 7810 definierten Format ID1 oder in dem Format eines elektronischen Reisepasses ID3 nach der Norm ISO 7810 befindet.

20. Verfahren zur Fertigung eines tragbaren kommunizierenden Gegenstands (20) nach einem der vorhergehenden Ansprüche, das Schritte zum Vorbereiten eines Einsatzes (40) mit Bahnen einer Antenne (25; 35; 35a, 35b) mit mindestens zwei elektronischen Modulen oder Komponenten (11, 12; 60) aufweist, die mit Verbindungsstiften (17, 18) und Verbindungsbahnen (21, 22, 23, 24) versehen sind, die sich zwischen den elektronischen Modulen oder Komponenten erstrecken, **dadurch gekennzeichnet, dass** es ferner folgende Schritte aufweist:
- auf einer Seite des Einsatzes (40) Anschlussbahnen (29) mit einer Dicke, die größer ist als die Dicke der Antennenbahnen (25; 35; 35a, 35b) und der Verbindungsbahnen (21, 22, 23, 24), anbringen, wobei jede Anschlussbahn (29) zwischen einem Verbindungsstift (17, 18) der elektronischen Module (11, 12) und einem Ende einer Verbindungsbahn (21, 22, 23, 24) angeordnet ist;
- die Enden (29b) der Anschlussbahnen (29) und die Enden der Verbindungsbahnen (21, 22, 23, 24) mittels Press- oder "Crimp"-Verbindungen miteinander verbinden;
- Schutzschichten (15, 16) auf beiden Seiten des Einsatzes (40) so zusammenfügen, dass sie einen Körper (50) des tragbaren Objekts (20) bilden;
- eine Seite des Körpers (50) des tragbaren Objekts (20) so bearbeiten, dass darin mindestens ein Hohlraum (51) gebildet wird, der ein elektronisches Modul (11, 12) aufnehmen kann;
- ein elektronisches Modul (11, 12) in den Hohlraum (51) übertragen und mit leitfähigem, anisotropem Kleber einkleben.

## Claims

1. Contact-operated, contactless, or mixed contact and contactless, communicating portable object (20), including a body (50) having outer protective layers (15, 16) and an insert (40) disposed between said protective layers, said insert (40) including a substrate (41) carrying a first electronic component (11; 60) having first connection pads (17) and bearing on the other hand at least one second electronic component in the form of an electronic module (12) disposed in a cavity (51) of the body (50) obtained by machining, said electronic module (12) having second connection pads (18), and said insert (40) further including on the one hand interconnection tracks (21, 22, 23, 24) intended to connect said first electronic component (11; 60) with said electronic module (12) to provide their power supply or the transfer of data between them, and on the other hand connection tracks (29) between said first electronic component (11; 60) and said interconnection tracks (21, 22, 23, 24), **characterised in that** said connection tracks (29) are located on the same side of the insert (40) as the electronic module (12) and are intended to be machined during the production of the cavity (51), and **in that** they are sized in 3D along an axis Z corresponding to the thickness of the communicating portable object (20) perpendicular to its plane X-Y, and **in that** said connection tracks (29) are of sufficient thickness (noted E) to be able to compensate for or take up any differences in location on the Z axis between the ends of the antenna tracks (25) or the interconnection tracks (21-24) and the corresponding connection pads (17, 18) located on the electronic modules (11, 12).

2. Communicating portable object (20) according to claim 1, **characterised in that** said first component (11) is an electronic module similar to the electronic module (12), the two electronic modules (11, 12) being composed of a substrate (70) provided with a microelectronic chip (60) protected by a drop of embedding resin (62).

3. Communicating portable object (20) according to claim 2, **characterised in that** the thickness (noted E) of the connection tracks (29) at each electronic module (11, 12) is at least equal to the absolute value of the machining tolerance (noted T) of the cavities (51) of the modules (11, 12), plus a small margin (noted R) corresponding to the residual thickness of the connection tracks (29) after machining of the cavities (51) in order to ensure the electrical continuity of the connection tracks, which is then represented by the equation: E = T + R.

4. Communicating portable object (20) according to any one of claims 1 to 3, **characterised in that** the absolute value of said machining tolerance (T) is in the order of 70 micrometres and **in that** the connection tracks (29) have a thickness in the order of 80 µm.

5. Communicating portable object (20) according to any one of claims 2 to 4, wherein there is a difference (noted D) in thickness between the value of the thicknesses of the substrates (70) of the two electronic modules (11, 12), **characterised in that** the thickness (noted E) of the connection tracks (29) at each module (11, 12) is at least equal to the absolute value of the machining tolerance (noted T) of the cavities (51) of the modules (11, 12), plus a small margin (noted R) corresponding to the residual thickness of the connection tracks (29) after machining the cavities (51) in order to ensure their electrical continuity, plus the difference in thickness (D), which is represented by the equation: E = T + R + D.

6. Communicating portable object (20) according to claim 5, **characterised in that** the substrate (70) of the first electronic module (11) has a thickness of the order of 200 µm, the substrate (70) of the second electronic module (12) has a thickness of the order of 210 µm, the difference D of the two thicknesses is of the order of 10 µm, and the thickness of the connection tracks (29) is of the order of 80 + 10 = 90 micrometres.

7. Communicating portable object (20) according to any one of claims 2 to 6, **characterised in that** said second electronic module (12) includes a biometric sensor, in particular a fingerprint sensor.

8. Communicating portable object (20) according to claim 1, **characterised in that** said first component is a microelectronic chip (60) mounted as a "flip-chip" on one of the faces of the insert (40).

9. Communicating portable object (20) according to one of claims 1 to 2, **characterised in that** said first electronic component (11) is a contact module disposed on the same face of the portable object as the second electronic component (12), and **in that** the connection tracks (29) are coincident with the interconnection tracks (21, 22, 23, 24) between the first component (11) and the second component (12).

10. Communicating portable object (20) according to one of claims 2 to 8, said first electronic component (11) being a contactless module or a module with a double communication interface, **characterised in that** the insert (40) includes an antenna (25) made in the form of tracks located on one of the faces of the insert (40).

11. Communicating portable object (20) according to any one of the preceding claims, **characterised in that** the interconnection tracks (21, 22, 23, 24) are located on one face of the substrate (41).

12. Communicating portable object (20) according to any one of the preceding claims, **characterised in that** the interconnection tracks (21, 22, 23, 24) have a thickness between 10 and 30 micrometres, and **in that** said connection tracks (29) have a thickness between 70 and 100 micrometres.

13. Communicating portable object (20) according to any one of the preceding claims, **characterised in that** a first end (29a) of each connection track (29) is connected to a connection pad (17, 18) of an electronic component (11, 12) by an anisotropic conductive adhesive.

14. Communicating portable object (20) according to any one of the preceding claims, **characterised in that** a second end (29b) of each connection track (29) is connected to an end of an interconnection track (21, 22, 23, 24) via a connection (28) by crimping or crimp.

15. Communicating portable object (20) according to any one of the preceding claims, **characterised in that** the insert (40) comprises a polymer substrate (41) with a thickness of between 25 and 250 micrometres, preferably between 25 and 50 micrometres, and **in that** the interconnection tracks (21, 22, 23, 24) and the connection tracks (29) are made of aluminium on said polymer sheet.

16. Communicating portable object (20) according to any one of the preceding claims, **characterised in that** said polymer substrate (41) has two opposite faces and **in that** the interconnection tracks (21, 22, 23, 24) are arranged on a first face and the connection tracks (29) are arranged on a second face of said substrate (41).

17. Communicating portable object (20) according to any one of claims 2 to 6, **characterised in that** said first electronic component (11) is an electronic module including a module antenna (35) electromagnetically coupled with an amplification antenna (36) located on the insert (40) and electromagnetically coupled with an antenna (25) also disposed on the insert (40) and providing the radio-frequency connection with the antenna (26) of the reader (27).

18. Communicating portable object (20) according to any one of claims 2 to 6, **characterised in that** each electronic module (11, 12) includes its own module antenna (35a, 35b), coupled respectively with an amplification antenna (36a, 36b) located on the insert (40) and electromagnetically coupled with an antenna (25) also disposed on the insert (40) and providing the radio-frequency connection with the antenna (26) of the reader (27).

19. Communicating portable object (20) according to any one of the preceding claims, **characterised in that** it is in the form of a chip card to the ID1 format defined in ISO 7810, or to the format of an ID3 electronic passport according to ISO 7810.

20. Method for manufacturing a communicating portable object (20) according to any one of the preceding claims, including steps consisting in preparing an insert (40) provided with tracks of an antenna (25; 35; 35a, 35b), at least two electronic modules or components (11, 12; 60) provided with connection pads (17, 18) and interconnection tracks (21, 22, 23, 24) extending between said electronic modules or components, **characterised in that** it includes further consisting of steps to:
- arrange on a face of the insert (40) connection tracks (29) with a thickness greater than the thickness of the tracks of the antennas (25; 35; 35a, 35b) and the interconnection tracks (21, 22, 23), 24), each connection track (29) being disposed between a connection pad (17, 18) of the electronic modules (11, 12) and an end of an interconnection track (21, 22, 23, 24) ;
- interconnect the ends (29b) of the connection tracks (29) and the ends of the interconnection tracks (21, 22, 23, 24) using crimps;
- assemble protective layers (15, 16) on either side of the insert (40) so as to form a body (50) of the portable object (20);
- machine a face of the body (50) of the portable object (20) so as to form therein at least one cavity (51) capable of receiving an electronic module (11, 12).
- transfer and glue an electronic module (11, 12) into said cavity (51) using anisotropic conductive glue.
